(19) Europäisches Patentamt
European Patent Office
Office européen des brevets

(11) Veröffentlichungsnummer: **0 038 773**
**A2**

# (12) EUROPÄISCHE PATENTANMELDUNG

(21) Anmeldenummer: 81810054.7

(22) Anmeldetag: 23.02.81

(51) Int. Cl.³: C 08 K 5/00
C 08 L 27/00

(30) Priorität: 28.02.80 CH 1592/80

(43) Veröffentlichungstag der Anmeldung:
28.10.81 Patentblatt 81/43

(84) Benannte Vertragsstaaten:
DE FR GB IT NL

(71) Anmelder: CIBA-GEIGY AG
Patentabteilung Postfach
CH-4002 Basel(CH)

(72) Erfinder: Wehner, Wolfgang, Dr.
Wetzbach 34
D-6144 Zwingenberg(DE)

(72) Erfinder: Müller, Horst, Dr.
Reichenberger Strasse 12
D-6149 Fürth/Odenwald(DE)

## (54) Stabilisatorgemische aus Metallmercaptiden und o-Dihydroxyarylcarbonsäureester oder -tetrahalogenverbindungen und damit stabilisierte chlorhaltige Thermoplaste.

(57) Stabilisatorgemische bestehend aus
a) einem Metallmercaptid der Formel I

$$Q(SX)_3 \quad (I)$$

und
b) einer o-Dihydroxyarylverbindung der Formel II

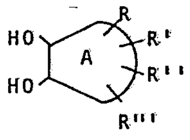
(II).

Bezüglich der Bedeutungen der Substituenten und Symbole in den Fomeln I und II wird auf Anspruch 1 verwiesen.

Diese Stabilisatorgemische gewährleisten eine ausgezeichnete thermostabilisierende Wirkung in chlorhaltigen Thermoplasten.

EP 0 038 773 A2

Croydon Printing Company Ltd.

3-12723/=

**Stabilisatorgemische aus Metallmercaptiden und o-Dihydroxyaryl-carbonsäureester oder -tetrahalogenverbindungen und damit stabilisierte chlorhaltige Thermoplaste**

Die vorliegende Erfindung betrifft neue Stabilisatorgemische bestehend aus Metallmercaptiden und o-Dihydroxyaryl-carbonsäureester oder -tetrahalogenverbindungen zur Stabilisierung von chlorhaltigen Thermoplasten.

Aus der DE-OS 2 629 202 sind PVC-Stabilisatorgemische aus Antimonmercaptiden und unsubstituierten oder mit Alkyl oder Aralkyl substituierten o-Dihydroxyphenolen beschrieben. In der gleichen Patentschrift wird allerdings darauf hingeweisen, dass andere funktionell substituierte Phenole auf Harze keine synergistische Hitzestabilisierungswirkung ausüben sollen.

Es wurde nun gefunden, dass entgegen dieser Behauptung, durch ausgewählte Gruppen substituierte o-Dihydroxyphenole zusammen mit Metallmercaptiden eine überraschend gute synergistische Wirkung zeigen.

Demnach betrifft die vorliegende Erfindung Stabilisatorgemische bestehend aus

a) einem Metallmercaptid der Formel I

$$Q(SX)_3 \qquad (I)$$

worin Q $-Sb<$ oder $R^1-Sn<$ bedeutet, X gegebenenfalls durch eine oder mehrere Gruppen $-OH$, $-OR^2$, $COOR^2$ oder $-OOCR^2$ substituiertes $C_1$-$C_{18}$ Alkyl, $C_3$-$C_{12}$ Cycloalkyl, $C_2$-$C_{18}$ Alkenyl, Cyclohexenyl oder eine der Gruppen der Formeln

$$-\left[(CH_2)_n-O\right]_m-R^2 \quad \text{oder} \quad -\left[(CH_2)_n-S\right]_m-R^2 \quad \text{ist,}$$

worin n die Zahlen 2 bis 8 und m die Zahlen 1 bis 200 bedeuten, $R^1$ gegebenenfalls durch eine oder mehrere Gruppen $-COOR^2$ oder $-OR^2$ substituiertes $C_1$-$C_{18}$ Alkyl, Phenyl oder Benzyl und $R^2$ $C_1$-$C_{18}$ Alkyl oder $C_2$-$C_{18}$ Alkenyl sind, und

b) einer o-Dihydroxyarylverbindung der Formel II

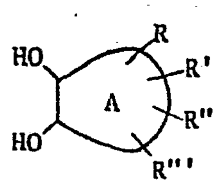

(II)

worin A ein aromatisches Ringsystem mit 6-14 Ringgliedern und 1-3 Ringen bedeutet, R Halogen oder eine Gruppe $-Y-COOR^{IV}$ und R' Wasserstoff oder eine Gruppe $-Y-COOR^{IV}$ bedeuten, worin $R^{IV}$ $C_1$-$C_{18}$ Alkyl und Y eine direkte Bindung, $C_1$-$C_6$ Alkylen oder $C_2$-$C_3$ Alkenylen sind, R" und R"' Wasserstoff bedeuten und, wenn R Halogen ist, R', R" und R"' ebenfalls Halogen bedeuten.

Stellen etwaige Substituenten Halogen dar, so handelt es sich bevorzugt um Brom.

Bedeuten etwaige Substituenten $C_1$-$C_{18}$ Alkyl so handelt es sich beispielsweise um Methyl, Aethyl, n-Propyl, Isopropyl, n-Butyl, sec.-Butyl, tert.-Butyl, n-Pentyl, n-Hexyl, 2-Methyl-pentyl, 2,4-Dimethylpentyl, n-Octyl, 6-Methylheptyl, 2-Aethylhexyl, n-Nonyl, verzweigtes oder unverzweigtes Decyl, Dodecyl, Tridecyl, Tetradecyl, Hexadecyl oder Octadecyl.

Stellt X $C_3$-$C_{12}$ Cycloalkyl dar, so handelt es sich insbesondere um Cyclopentyl, Cycloheptyl und bevorzugt um Cyclohexyl.

Bedeutet X $C_2$-$C_{18}$ Alkenyl, so handelt es sich beispielsweise um Vinyl, Allyl, Methallyl, oder verzweigtes oder unverzweigtes 2-Butenyl, 2-Hexenyl, 3-Hexenyl, 2-Octenyl, 2-Dodecenyl, 3-Dodecenyl, 2-Tetradecenyl, 2-Hexadecenyl oder 2-Octadecenyl. Bevorzugt ist Allyl.

Bedeutet Y $C_1$-$C_6$ Alkylen, so handelt es sich um verzweigtes oder insbesondere geradkettiges Alkylen, wie beispielsweise Methylen, Aethylen, Propylen-2,2, Pentylen-3,3, Tri-, Tetra-, Penta- oder Hexamethylen. Bevorzugt sind Methylen und Aethylen.

Als $C_2$-$C_3$ Alkenylen bedeutet Y Vinylen oder Allylen. Bevorzugt ist Vinylen.

A bedeutet als aromatisches Ringsystem insbesondere ein solches abgeleitet von Benzol, Naphthalin, Anthracen oder Phenanthren, bevorzugt von Benzol.

Besonders interessant sind Stabilisatorgemische enthaltend als Komponente a) ein Metallmercaptid der Formel I, worin Q $-Sb\langle$ oder $R^1-Sn\langle$ bedeutet, X gegebenenfalls durch eine Gruppe -OH, $-OR^2$, $-COOR^2$ oder $-OOCR^2$ substituiertes $C_1$-$C_{18}$ Alkyl, Hexyl, Allyl oder Cyclohexenyl ist, $R^1$ und $R^2$ unabhängig voneinander $C_1$-$C_{18}$ Alkyl bedeuten.

Ebenfalls besonders interessant sind Stabilisatorgemische enthaltend als Komponente b) eine Verbindung der Formel III

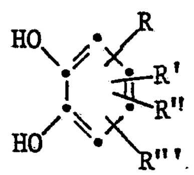

(III)

worin R, R', R" und R"' die oben angegebene Bedeutung haben.

Von ganz besonderem Interesse sind Stabilisatorgemische enthaltend als Komponente a) ein Metallmercaptid der Formel I, worin Q die in der letzten Bevorzugung angegebene Bedeutung hat und X eine Gruppe $-CH_2-COOR^7$ oder $-CH_2CH_2-COOR^7$ bedeutet, worin $R^7$ $C_1-C_8$ Alkyl ist.

$R^7$ ist als $C_1-C_8$ Alkyl beispielsweise Methyl, Aethyl, n-Propyl, Isopropyl, n-Butyl, tert.-Butyl, n-Pentyl, n-Hexyl, 2-Methylpentyl, 2,4-Dimethylpentyl, n-Octyl und insbesondere 2-Aethylhexyl.

Ebenfalls von ganz besonderem Interesse sind Stabilisatorgemische enthaltend als Komponente b) eine Verbindung der Formel IV

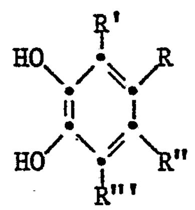

(IV)

worin R Brom oder eine Gruppe $-COOR^{IV}$, $-CH_2-CH_2-COOR^{IV}$ oder $-CH=CH-COOR^{IV}$ bedeutet, worin $R^{IV}$ $C_1-C_4$ Alkyl ist, R', R" und R"', wenn R Brom ist, ebenfalls Brom, andernfalls Wasserstoff bedeuten.

$R^{IV}$ ist als $C_1-C_4$ Alkyl beispielsweise Methyl, Aethyl, n-Propyl, Isopropyl, n-Butyl, tert.-Butyl; bevorzugt ist $R^{IV}$ Methyl und insbesondere Aethyl.

Bevorzugt sind Stabilisatorgemische, die als Komponente a) ein Antimonmercaptid der Formel $Sb(SX)_3$ enthalten, worin X die oben angegebene Bedeutung hat und als Komponente b) 3,4-Dihydroxybenzoesäureäthylester oder Tetrabrombrenzcatechin.

Das Mischungsverhältnis von a) und b) variiert beispielsweise zwischen 50:50 und 99:1, bevorzugt zwischen 80:20 und 98:2 Gewichtsteilen.

Im Stabilisatorgemisch können auch Lösungsmittel enthalten sein.

Die Metallmercaptide der Formel I sind allgemein bekannt und können nach bekannten Methoden hergestellt werden.

Auch die Ester der Formel II sind allgemein bekannt und können aus den entsprechenden Säuren nach bekannten Methoden hergestellt werden. Die Verbindungen der Formel II, worin R, R', R" und R"' Halogen bedeuten, wie beispielsweise Tetrabrombrenzcatechin stellen bekannte Substanzen dar.

Das erfindungsgemässe synergistische Stabilisatorgemisch eignet sich hervorragend zum Schutz gegen den Abbau durch Wärmeeinwirkung von chlorhaltigen Thermoplasten.

Die Einzelbestandteile des Stabilisatorgemisches werden einzeln oder bereits vermischt, im oben erwähnten Mischungsverhältnis den zu stabilisierenden Thermoplasten vor der Verarbeitung in üblichen Einrichtungen einverleibt, und zwar in jeweiligen Mengen von 0,05 bis 4,0, bevorzugt 0,1 bis 0,5 Gew.-%, bezogen auf die gesamte Zusammensetzung.

Als chlorhaltige Thermoplaste seien genannt: Polyvinylidenchlorid und bevorzugt Polymere aus oder auf der Grundlage von Vinylchlorid. Bevorzugt sind Suspensions- und Massepolymere und ausgewaschene, also emulgatorarme Emulsionspolymere. Beim Polyvinylchlorid kann es sich um weichmacherhaltiges oder um Hart-PVC handeln.

Als Comonomere für Thermoplaste auf der Grundlage von Vinylchlorid seien genannt: Vinilidenchlorid, Transdichloräthen, Aethylen, Propylen, Butylen, Maleinsäure, Acrylsäure, Fumarsäure oder Itaconsäure.

Vor, während oder nach der Zugabe des erfindungsgemässen Stabilisatorgemisches können je nach Verwendungszweck der Formmasse weitere Zusätze einverleibt werden.

Als weitere Additive, mit denen zusammen die erfindungsgemäss verwendbaren Stabilisatoren eingesetzt werden können, sind beispielsweise zu nennen:

Antioxydantien, wie 2,6-Dialkylphenole, Derivate von alkylierten Hydrochinonen, hydroxylierte Thiodiphenyläther, Alkyliden-bisphenole, O-, N- und S-Benzylverbindungen, hydroxybenzylierte Malonester, Hydroxybenzyl-Aromaten, s-Triazinverbindungen, Amide der β-(3,5-Di-tert.-butyl-4-hydroxyphenyl)-propionsäure, Ester der β-(3,5-Di-tert.-butyl-4-hydroxyphenyl)-propionsäure, Ester der β-(5-tert.-Butyl-4-hydroxy-3-methylphenyl)-propionsäure, Ester der 3,5-Di-tert.-butyl-4-hydroxyphenylessigsäure, Acylaminophenole, Benzylphosphonate, Aminoarylderivate, UV-Absorber und Lichtschutzmittel, wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, des weiteren Nickelverbindungen, sterisch gehinderte Amine, Oxalsäurediamide, Metalldesaktivatoren, Phosphite, peroxidzerstörende Verbindungen, Polyamidstabilisatoren, basische Costabilisatoren, Nukleierungsmittel oder sonstige Zusätze, wie z.B. Weichmacher, Gleitmittel, Emulgatoren, Füllstoffe, Russ, Asbest, Kaolin, Talk, Glasfasern, Pigmente, optische Aufheller, Flammschutzmittel, Antistatica.

Beispiele für weitere Additive, mit denen zusammen die erfindungsgemäss verwendbaren Stabilisatoren eingesetzt werden können, finden sich in der DE-OS 2 427 853 auf Seiten 18 bis 24.

Bevorzugte Costabilisatoren sind Ca-Salze von Carbonsäuren und/oder Phenolen, die in einer Menge von 0,05 bis 4,0 Gew.-% bezogen auf die gesamte Zusammensetzung enthalten sein können.

Eine bevorzugte Formulierung für einen mit der erfindungsgemässen Stabilisatormischung stabilisierten chlorhaltigen Thermoplasten ist die folgende:

0,05 bis 3,0 Teile Metallmercaptid der Formel I
0,01 bis 1,0 Teile o-Dihydroxyarylverbindung der Formel II
0,05 bis 4,0 Teile Ca-Salz einer Carbonsäure und/oder eines Phenols
82,0 bis 98,9 Teile PVC.

Das erfindungsgemässe Stabilisationsgemisch gewährleistet eine ausgezeichnete thermostabilisierende Wirkung, welche diejenige der Einzelkomponenten weit übersteigt.

Die nachfolgenden Beispiele dienen der näheren Erläuterung der Erfindung. Teile sind dabei Gewichtsteile und Prozente, Gewichtsprozente.

Beispiel 1:

a) 100 Teile eines für die Herstellung von Rohren geeignetes PVC (®Solvic 268 RC) wurde mit 1 Teil Kreide, 1 Teil Titandioxid, 0,8 Teile Calziumstearat, 0,8 Teile eines Gleitmittels auf Kohlenwasserstoffbasis (®Irgawax 367) sowie 0,4 Teilen Antimontristhioglykolsäureisooctylester als Grundstabilisator vermischt. Die Mischung wurde bei 200° auf einem Laborwalzwerk verarbeitet und der gebildeten Folie im zeitlichen Abstand von 3 Minuten Proben entnommen, deren Verfärbung festgestellt wurde (Yellownessindex). Nachstehende Tabelle enthält die Messergebnisse.

| | | | | |
|---|---|---|---|---|
| Walzzeit : | 3' | 6' | 9' | 12' |
| Verfärbungsgrad : | 16,5 | 20,6 | 26,7 | 38,4 |

b) Es wurde wie bei Beispiel 1 a) vorgegangen, jedoch der Mischung zusätzlich noch 0,1 Teile 3,4-Dihydroxybenzoesäureäthylester zugesetzt. Es wurde jetzt eine deutlich geringere Verfärbung festgestellt, wie die folgende Tabelle zeigt.

| | | | | | |
|---|---|---|---|---|---|
| Walzzeit | : | 3' | 6' | 9' | 12' |
| Verfärbungsgrad | : | 7,0 | 9,1 | 14,6 | 38,6 |

Beispiel 2:

a) Es wurde nach Beispiel 1 a) verfahren mit folgender Abänderung: anstelle von Antimontris-thioglykolsäureisooctylester wurde Monobutylzinntristhioglykolsäuremyristylester als Grundstabilisator eingesetzt. Es ergaben sich folgende Messwerte.

| | | | | |
|---|---|---|---|---|
| Walzzeit | : | 3' | 6' | 9' |
| Verfärbungsgrad | : | 19,8 | 30,3 | 38,5 |

b) Es wurde nach Beispiel 2 a) verfahren, der Mischung jedoch zusätzlich 0,1 Teile 3,4-Dihydroxybenzoesäureäthylester zugesetzt. Hierdurch ergab sich folgende Werttabelle:

| | | | | |
|---|---|---|---|---|
| Walzzeit | : | 3' | 6' | 9' |
| Verfärbungsgrad | : | 11,5 | 22,0 | 41,6. |

Beispiel 3:

a) 100 Teile eines für die Herstellung von Rohren geeignetes PVC (Solvic 268 RC) wurde mit 1 Teil Kreide, 1 Teil Titandioxid, 0,8 Teilen Ca-Stearat 0,8 Teilen eines Gleitmittels auf Kohlenwasserstoffbasis (Irgawax 367), 0,15 Teilen epoxidiertem Octyloleat sowie 0,25 Teilen Antimontristhioglykolsäure-2-äthylhexylester vermischt. Die Mischung wurde bei 200° auf einem Laborwalzwerk verarbeitet und der gebildeten Folie im Abstand von 3 Minuten Proben entnommen, deren Verfärbung festgestellt wurde (Yellownessindex). Nachstehende Tabelle enthält die Messergebnisse

| | | | | |
|---|---|---|---|---|
| Walzzeit | : | 3' | 6' | 9' |
| Verfärbungsgrad | : | 19,9 | 26,4 | 37,0 |

b) Es wurde nach Beispiel 3 a) verfahren, der Mischung jedoch zusätzlich noch 0,02 Teile Tetrabrombrenzcatechin zugesetzt. Es wurde jetzt eine deutlich geringere Verfärbung festgestellt, wie die folgende Tabelle zeigt:

| | | | |
|---|---|---|---|
| Walzzeit : | 3' | 6' | 9' |
| Verfärbungsgrad : | 9,0 | 15,9 | 36,5. |

Patentansprüche

1. Stabilisatormischung bestehend aus

a) einem Metallmercaptid der Formel I

$$Q(SX)_3 \qquad (I)$$

worin Q -Sb< oder $R^1$-Sn< bedeutet, X gegebenenfalls durch eine oder mehrere Gruppen -OH, $-OR^2$, $-COOR^2$ oder $-OOCR^2$ substituiertes $C_1$-$C_{18}$ Alkyl, $C_3$-$C_{12}$ Cycloalkyl, $C_2$-$C_{18}$ Alkenyl, Cyclohexenyl oder eine der Gruppen der Formeln

$$-\left[(CH_2)_n-O\right]_m-R^2 \quad \text{oder} \quad -\left[(CH_2)_n-S\right]_m-R^2 \quad \text{ist,}$$

worin n die Zahlen 2 bis 8 und m die Zahlen 1 bis 200 bedeuten, $R^1$ gegebenenfalls durch eine oder mehrere Gruppen $-COOR^2$ oder $OR^2$ substituiertes $C_1$-$C_{18}$ Alkyl, Phenyl oder Benzyl und $R^2$ $C_1$-$C_{18}$ Alkyl oder $C_2$-$C_{18}$ Alkenyl sind, und

b) einer o-Dihydroxyarylverbindung der Formel II

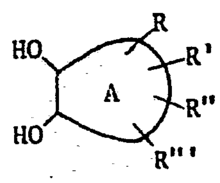

(II)

worin A ein aromatisches Ringsystem mit 6-14 Ringgliedern und 1-3 Ringen bedeutet, R Halogen oder eine Gruppe $-Y-COOR^{IV}$ und R' Wasserstoff oder eine Gruppe $-Y-COOR^{IV}$ bedeuten, worin $R^{IV}$ $C_1$-$C_{18}$ Alkyl und Y eine direkte Bindung, $C_1$-$C_6$Alkylen oder $C_2$-$C_3$ Alkenylen sind, R" und R"' Wasserstoff bedeuten und, wenn R Halogen ist, R', R" und R"' ebenfalls Halogen bedeuten.

2. Stabilisatormischung gemäss Anspruch 1, dadurch gekennzeichnet, dass als Komponete a) ein Metallmercaptid der Formel I enthalten ist,

worin Q -Sb< oder $R^1$-Sn< bedeutet, X gegebenenfalls durch eine Gruppe -OH, $-OR^2$, $-COOR^2$ oder $-OOCR^2$ substituiertes $C_1$-$C_{18}$ Alkyl, Hexyl, Allyl oder Cyclohexenyl ist, $R^1$ und $R^2$ unabhängig voneinander $C_1$-$C_{18}$ Alkyl bedeuten.

3. Stabilisatormischung gemäss Anspruch 2, dadurch gekennzeichnet, dass als Komponente a) ein Metallmercaptid der Formel I enthalten ist, worin Q die im Anspruch 2 angegebene Bedeutung hat und X eine Gruppe $-CH_2-COOR^7$ oder $-CH_2CH_2-COOR^7$ bedeutet, worin $R^7$ $C_1$-$C_8$ Alkyl ist.

4. Stabilisatormischung gemäss Anspruch 1, dadurch gekennzeichnet, dass als Komponente a) ein Antimonmercaptid der Formel $Sb(SX)_3$ enthalten ist, worin X die in Anspruch 1 angegebene Bedeutung hat.

5. Stabilisatormischung gemäss Anspruch 1, dadurch gekennzeichnet, dass als Komponente b) eine Verbindung der Formel III

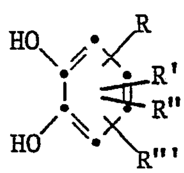

(III)

enthalten ist, worin R, R', R" und R"' die im Anspruch 1 angegebene Bedeutung haben.

6. Stabilisatormischung gemäss Anspruch 1, dadurch gekennzeichnet, dass als Komponente b) eine Verbindung der Formel IV

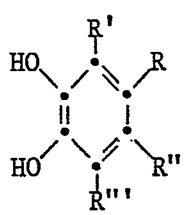

(IV)

enthalten ist, worin R Brom oder eine Gruppe $-COOR^{IV}$, $-CH_2-CH_2-COOR^{IV}$

oder $-CH=CH-COOR^{IV}$ bedeutet, worin $R^{IV}$ $C_1$-$C_4$ Alkyl ist, R', R" und R"', wenn R Brom ist, ebenfalls Brom, andernfalls Wasserstoff bedeuten.

7. Stabilisatormischung gemäss Anspruch 1, enthaltend als Komponente b) 3,4-Dihydroxy-benzoesäureäthylester.

8. Stabilisatormischung gemäss Anspruch 1, enthaltend als Komponente b) Tetrabrombrenzcatechin.

9. Stabilisatormischung gemäss Anspruch 1, dadurch gekennzeichnet, dass die Komponenten a) und b) in einem Mischungsverhältnis zwischen 50:50 und 99:1 enthalten sind.

10. Stabilisierte Zusammensetzung enthaltend ein chlorhaltiges thermoplastisches Polymer und als Stabilisator ein Stabilisatorgemisch gemäss Anspruch 1 in einer Menge von 0,05 bis 4,0 Gew.-%, bezogen auf die gesamte Zusammensetzung.

11. Stabilisierte Zusammensetzung gemäss Anspruch 10, dadurch gekennzeichnet, dass sie zusätzlich einen weiteren Stabilisator enthält.

12. Stabilisierte Zusammensetzung gemäss den Ansprüchen 10 und 11, dadurch gekennzeichnet, dass der chlorhaltige Thermoplast ein Polymer aus oder auf der Grundlage von Vinylchlorid ist.

13. Verwendung einer Stabilisatormischung gemäss Anspruch 1 zum Stabilisieren von chlorhaltigen thermoplastischen Polymeren.